(19) **Europäisches Patentamt**

**European Patent Office**

**Office européen des brevets**

(11) **EP 1 508 606 A1**

(12) **EUROPÄISCHE PATENTANMELDUNG**

(43) Veröffentlichungstag:
 **23.02.2005 Patentblatt 2005/08**

(51) Int Cl.⁷: **C09K 17/04**

(21) Anmeldenummer: **04450153.4**

(22) Anmeldetag: **22.07.2004**

(84) Benannte Vertragsstaaten:
 **AT BE BG CH CY CZ DE DK EE ES FI FR GB GR HU IE IT LI LU MC NL PL PT RO SE SI SK TR**
 Benannte Erstreckungsstaaten:
 **AL HR LT LV MK**

(30) Priorität: **21.08.2003 AT 13212003**

(71) Anmelder: **Lueger, Josef**
 **3243 St. Leonhard am Forst (AT)**

(72) Erfinder: **Lueger, Josef**
 **3243 St. Leonhard am Forst (AT)**

(74) Vertreter: **Beer, Manfred, Dipl.-Ing. et al**
 **Lindengasse 8**
 **1070 Wien (AT)**

(54) **Verfahren zum Abdichten von Böden und Baumaterial**

(57) Zum Abdichten von losen Böden wird in den Boden eine Lösung eines Eisen(II)-salzes und eine Lösung von Kaliumpermanganat eingebracht. Dabei oxidiert das Eisen(II)-Salz zu dreiwertigem Eisen, das vornehmlich zu Hohlräume im Boden abdichtendem Eisenoxidhydrat ausfällt. Das Abdichten des Bodens wird durch ausfällende Mangan-Verbindungen, wie $Mn_3O_4$ unterstützt. Der Acetat-Rest kann zu Kohlendioxid und Wasser oxidiert werden.

**EP 1 508 606 A1**

**Beschreibung**

Die Erfindung betrifft ein Verfahren zum Abdichten und Verfestigen von Böden und Baumaterial mit den Merkmalen des einleitenden Teils des unabhängigen Anspruches 1.

Im Besonderen in Betracht gezogen sind lose Böden, wie Sandböden, Schotterböden und auch geklüfteter Fels.

Das Abdichten von Böden ist beispielsweise im Bauwesen eine wichtige Maßnahme, so z.B. bei der Abdichtung von Tunneln gegen zutretende Bergwässer, bei der Abdichtung von Tiefgaragen, Dämmen oder Verbindungsstellen von Spundwänden, oder um Wasserzutritte zu Baugruben zu minimieren.

Beispiele für erfindungsgemäß abzudichtende Baumaterialien sind sandartige Baustoffe oder Anschüttungen.

Bekannt sind Alterungserscheinungen an Brunnen, die am allmählichen Zurückgehen der Liefermenge des Brunnens erkennbar sind. Unter den Gründen von Alterungserscheinungen ist die sogenannte Verockerung bekannt. Das Verockern von Brunnen ist ein chemisch-biologisches Problem, wobei die Inkrustation durch das Ausfällen von in Wasser gelösten Stoffen, hauptsächlich Eisen, verursacht wird, und die ausgefällten Stoffe in umgewandelter Form die Poren der Filterkiese und die Hohlräume des Grundwasserleiters verstopfen. Bekannt ist auch, dass das Verockern von Brunnen durch Mikroorganismen (Bakterien) gefördert wird. Im Zusammenhang mit dem Verockern von Brunnen kann beispielhaft auf Kauch E.P. et al. 1988: Städtischer Tiefbau I. Wasserversorgung. 2. Aufl. Wien (Manz, Österr. Bundesverlag), Hölting B. 1989: Hydrogeologie. Einführung in die Allgemeine und Angewandte Hydrogeologie. 3. Aufl. Stuttgart (Enke), und Griebler C., Mösslacher F. et al. 2003: Grundwasser-Ökologie. Wien (Facultas) verwiesen werden.

In der DE 42 31 363 A wird ein Verfahren zum Bilden einer temporären Grundwasserdichtwand beschrieben, bei welchem Verfahren Eisen-II-Verbindungen und Mangan-III-Verbindungen durch Eintritt von Luft und/oder Reinsauerstoff und/oder $H_2O_2$ zu Eisen-III-Verbindungen und Mangan-IV-Verbindungen oxidiert werden sollen. Durch die nach der Oxidation gebildeten Verbindungen sollen die Bodenporen zu einer Grundwasserdichtwand zuwachsen. Welche Eisen und/oder Manganverbindungen konkret eingesetzt werden, ist in der DE 42 31 363 A nicht erwähnt. Auch sind andere Oxidationsmittel als Luft, Reinsauerstoff und $H_2O_2$ nicht genannt.

In der DE 42 42 682 A wird ein Verfahren zum Herstellen einer Barriere beschrieben, die verhindern soll, dass sich im Boden oder im Grundwasser vorhandene Schadstoffe ausbreiten. Diese Barriere soll durch Einbringen von Oxidationsmitteln und Eisen-II-Salzen und/oder Mangan-II-Salzen erreicht werden. Beispiele für Eisen-II-Salze und Mangan-II-Salze sind in der DE 42 42 682 A nicht erwähnt. Als Oxidationsmittel sind in der DE 42 42 682 A Sauerstoff, Luft, Ozon und im Wasser gelöste Peroxide erwähnt.

In der DE 196 06 943 A wird von der zuvor behandelten DE 42 42 682 A ausgegangen und vorgeschlagen, die Abdichtung dadurch aufrechtzuhalten (also eine Reaktion zu vermeiden), dass nicht wie bisher, ein oxidierendes chemisches Potential, z.B. durch Lufteintrag aufrechterhalten wird, sondern dass Halbleiterbarrieren in Form von Okker-Barrieren, die einen hohen Huminstoffgehalt haben, verwendet werden. Auch hier werden als Oxidationsmittel Gase, wie Sauerstoff oder Luft, vorgeschlagen.

Der Erfindung liegt die Aufgabe zugrunde, ein Verfahren zum Abdichten von Böden und Baumaterial anzugeben, das einfach und zielführend durchzuführen ist, ohne dass die Umwelt belastende Stoffe in den Boden bzw. das Baumaterial eingebracht werden müssen.

Gelöst wird diese Aufgabe bei einem Verfahren der eingangs genannten Gattung, erfindungsgemäß mit den Maßnahmen des Anspruches 1.

Bevorzugte und vorteilhafte Ausgestaltungen des erfindungsgemäßen Verfahrens sind Gegenstand der Unteransprüche.

Grundsätzlich kann bei dem erfindungsgemäßen Verfahren jeder in Wasser lösliche, und aus diesem beispielsweise durch Zugabe eines Ausfällmittels ausfällbare Stoff, der in ausgefälltem Zustand voluminös ist, und der Hohlräume, wie Poren, im Boden oder Baumaterial verlegt, eingesetzt werden. Beispiele für im Rahmen der Erfindung verwendbare Stoffe sind insbesondere Eisenverbindungen, darunter Fe(III)-Salze und Fe(II)-Salze. In Betracht gezogen sind erfindungsgemäß unter anderem insbesondere Fe(III)-Chlorid, $Fe(OH)_2Cl$ und Eisensulfate, insbesondere Fe(II) oder Fe(III)-Sulfate.

Wenn Fe(II)-Verbindungen eingesetzt werden, ist es vorteilhaft, diese zu Fe(III) zu oxidieren, da z.B. Fe(III)-Hydroxide besonders voluminös sind.

Wenn beim erfindungsgemäßen Verfahren gemäß einer bevorzugten Ausführungsform ein Eisen-II-Salz einer zu Kohlendioxid und Wasser oxidierbaren Säure eingesetzt wird, ergibt sich eine gute Umweltverträglichkeit des Verfahrens und seiner Produkte. Solche Säuren sind vornehmlich organische Karbonsäuren, insbesondere kurzkettige organische Karbonsäuren, wie Ameisensäure, Essigsäure, oder Zitronensäure. Als Ausgangsstoffe kommen bei der Erfindung insbesondere Eisensalze solcher Karbonsäuren zur Anwendung.

Durch die erfindungsgemäß bevorzugte Maßnahme, als Oxidationsmittel ein solches einzusetzen, das nach der Redoxreaktion eine in Wasser schlecht oder nicht lösbare Verbindung ergibt, wird die abdichtende und verfestigende Wirkung des erfindungsgemäßen Verfahrens auf einfache Weise vorteilhaft beeinflusst.

In einer Ausführungsform kann bei dem erfindungsgemäßen Verfahren beispielsweise wie folgt vorgegangen werden.

Eine wässerige Eisen(II)-acetat-Lösung wird über Bohrungen in den Boden injiziert. In einer zweiten Phase wird Kaliumpermanganat ($KMnO_4$) in wässeriger Lösung in den Boden eingebracht. Dies kann nach dem Injizieren von Eisen(II)-acetat über dieselben Bohrungen oder auch gleichzeitig mit dem Injizieren von Eisen(II)-acetat über benachbarte Injektionssonden erfolgen. Das zweiwertige Eisen im Eisenacetat wird durch das Oxidationsmittel Kaliumpermanganat zu dreiwertigem Eisen oxidiert und fällt vorwiegend als Eisen(III)-hydroxid, $Fe(OH)_3$ aus, welches sich zu Eisen(III)-oxidhydrat, $FeO(OH)$, umbildet. Freigesetzte Essigsäure und Acetat-Ionen werden durch das Oxidationsmittel über mehrere Stufen zu Wasser und Kohlendioxid abgebaut.

Bei diesen Vorgängen (Redoxreaktionen) wird Kaliumpermanganat in Gegenwart von Wasser zu verschiedenen zwei- bis vierwertigen Manganhydroxiden und -oxiden ($Mn_3O_4$) reduziert, die ebenso wie die Eisen(III)-Verbindungen ausfallen.

Durch die Eisen- und/oder Manganoxidausfällungen werden Hohlräume, wie Poren, im Boden verstopft, was zu der gewünschten Abdichtung des Bodens führt.

Da bei der Reaktion - die Verwendung von Salzen entsprechender Säuren vorausgesetzt - auch Kohlendioxid gebildet wird, kann es - insbesondere in basischen oder karbonatischen Böden - zur Bildung von Eisenkarbonat (Siderit) kommen, was das Verfestigen des Bodens oder des Baumaterials unterstützt.

Als Oxidationsmittel sind im Rahmen der Erfindung folgende einsetzbar:

Grundsätzlich sind alle (umweltverträglichen) Oxidationsmittel geeignet. Bevorzugt sind im Rahmen der Erfindung solche Oxidationsmittel, welche nach der Redox-Reaktion selbst einen voluminösen Stoff bilden, der das erfindungsgemäß angestrebte Abdichten und/oder Verfestigen unterstützt.

Bevorzugt sind erfindungsgemäß insbesondere Permanganate, insbesondere Kaliumpermanganat. Diese Stoffe sind völlig unbedenklich. Sie sind ungiftig und werden vollständig zu Stoffen abgebaut, die in der Natur vorkommen.

Die Ausgangsstoffe werden bevorzugt in wässeriger Lösung angewendet, d.h. ihre Viskosität ist kaum höher als die von Wasser. Dadurch ist auch bei sandigen oder feinkörnigen Böden ein lückenloses Eindringen der Ausgangsstoffe gewährleistet.

Nachstehend werden Beispiele für das erfindungsgemäße Verfahren und für bei dessen Ausführen ablaufende Reaktionen wiedergegeben:

Beispiel 1:

Bei dem erfindungsgemäßen Verfahren am Beispiel des Einsatzes von Eisen(II)-acetat als ausfällbarer Stoff und Kaliumpermanganat als oxidierender Stoff läuft die in der nachstehenden Reaktionsgleichung wieder gegebene Redoxreaktion ab:

$$5\ Fe\ (CH_3COO)_2 + 1\ KMnO_4 + 6H_2O \rightarrow 7\ CH_3COOH + 1\ Mn\ (CH_3COO)_2 + 1\ CH_3COOK$$

$$+ 5\ FeO(OH)$$

Ausgangsstoffe:
Eisen(II)-acetat und Kaliumpermanganat im Gewichtsverhältnis 84,6% zu 15,4 % (ca. 5,5:1)
Ausfällung:
theoretisch ca. 39 Gew.% der Ausgangsstoffe
Wasseraufnahme:
10,5 Gew.% der Ausgangsstoffe
Infolge der geringen Menge an Kaliumpermanganat findet keine Oxidation der Acetat-Ionen und kein Ausfällen von Oxiden statt. Es kommt daher zur Bildung von Essigsäure und Acetaten. Ein noch höherer Anteil an Eisen-(II)acetat führt dazu, dass nicht mehr alles zweiwertige Eisen zu dreiwertigem Eisen oxidiert werden kann, wodurch erhebliche Eisenanteile in Lösung bleiben würden.
Anwendung:
bei stark basischem und/oder oxidiertem Boden.

Beispiel 2:

Vorteilhaft ist es, wenn die Eisen(II)-Verbindung ein Salz einer organischen Säure ist, die unter der Wirkung des Oxidationsmittel zu Kohlendioxid und Wasser oxidiert werden kann. Dabei laufen bei Verwendung von Eisen(II)-acetat und Kaliumpermanganat die in der nachstehenden Reaktionsgleichung wiedergegebenen Reaktionen ab:

$$13 \, Fe \, (CH_3COO)_2 + 51 \, KMnO_4 \rightarrow 13 \, FeO \, (OH) + 17 \, Mn_3O_4 + 51 \, KOH + 52 \, CO_2 + 7 \, H_2O$$

Ausgangsstoffe:
Eisen(II)-acetat und Kaliumpermanganat im Gewichtsverhältnis 21,9% zu 78,1% (ca. 1:4)
Ausfällung: theoretisch fast 50 Gew. % der Ausgangsstoffe
Wasserabgabe: 1,2 Gew.% der Reaktionsprodukte
Es entsteht ein hoher Anteil an Kaliumhydroxid (27,7 Gew.% der Reaktionsprodukte), der jedoch vollständig von der gebildeten Kohlensäure ($CO_2$) abgepuffert wird. Die Reaktion führt zum vollständigen Abbau aller Acetate. Ein noch höherer Anteil an Kaliumpermanganat führt je nach Oxidationsgrad des Bodens dazu, dass eventuell Mangan-Ionen in Lösung bleiben und nicht als Oxid ausfallen würden. Anwendung: bei stark saurem und /oder reduzierendem Boden.

Bei den oben beschriebenen Reaktionen stehen je nach den Mengenverhältnissen unterschiedliche Mengen an Reaktionsprodukten. Wie die Reaktionsprodukte entstehen, ist in der nachstehenden Tabelle in Abhängigkeit vom Verhältnis Eisen(II)-acetat zu Kaliumpermanganat angegeben.

Tab. 1:

| Reaktionsprodukte | | | | | | | | | |
|---|---|---|---|---|---|---|---|---|---|
| Gew.verh. Fe-Ace-tat:$KMnO_4$ | 1 : 3,5 | 1 : 3 | 1 : 2 | 2 : 3 | 1 : 1 | 2 : 1 | 3 : 1 | 4 : 1 | 5,5 : 1 |
| Reaktionsprodukte in Gew.-% | | | | | | | | | |
| $H_2O$ | 1,2 | 1,3 | 1,6 | 1, 8 | - | - | - | - | - |
| $H^+$ | - | - | - | - | 0,1 | 0,5 | 0,6 | 0,7 | 0,6 |
| $K^+$ | 19,3 | 18,6 | 16,7 | 14,8 | 12,4 | 7,8 | 5,7 | 4,5 | 3,4 |
| $Mn^{2+}$ | - | - | - | - | - | - | - | - | 4,8 |
| $OH^-$ | 8,4 | 7,3 | 4,5 | 1, 6 | - | - | - | - | - |
| $CH_3 \, COO^-$ | - | 2,7 | 9,7 | 16, 7 | 25,9 | 39,0 | 45,0 | 48,4 | 52,0 |
| $CO_2$ | 22,2 | 21,1 | 18,3 | 15,6 | 11,9 | 5,5 | 2,6 | 0,9 | - |
| $Mn_3O_4$ | 37,7 | 36,3 | 32,6 | 29, 0 | 24, 1 | 15,2 | 11,1 | 8,7 | - |
| FeOOH | 11,2 | 12,7 | 16,6 | 20, 4 | 25, 5 | 32,1 | 35,1 | 36,9 | 39,1 |
| Wasseraufnahme in Gew.-% der Einsatzstoffe | | | | | | | | | |
| | - | - | - | - | - | 6,1 | 9,1 | 10,9 | 10,5 |

Aus der Tabelle ist folgendes ersichtlich:

Wasser: Bis zu einem Fe(II)-Acetat: Kaliumpermanganat Gewichtsverhältnis von 2:3 werden unbedeutende Wasseranteile produziert. Ab einem Verhältnis von ca. 2:1 steigt die Wasseraufnahme auf ca. 11 Prozent.
Kohlendioxid: Die $CO_2$-Produktion steigt mit dem Anteil des Kaliumpermanganats infolge der Oxidation von Acetat.
Hydroxid: Der Hydroxid-Ionenanteil wächst mit dem Anteil des Kaliumpermanganats. Ab einem Verhältnis von Eisenacetat-Kaliumpermanganat von 1:1 wird kein Hydroxid mehr gebildet.
Essigsäure und Acetate: Je höher der Anteil an Eisenacetat, desto mehr Essigsäure und Acetate entstehen.
Eisen- und Manganoxide: Die Ausfällung der Eisen- und Manganoxide geht in zwei unterschiedlich rasch verlaufenden Stufen vor sich:

1. Ausfallen von Eisen(III)oxidhydrat
2. Abbau von Acetat und allenfalls anderer im Boden vorkommender organischer Stoffe bei gleichzeitigem Ausfall von Manganoxiden.

Je höher der Anteil an Kaliumpermanganat, desto mehr verschiebt sich der chemische Prozess auf die zweite Phase (Oxidation organischer Anteile).

Beispiel 3:

in 100 ml 0,1-molare wässrige Lösung von $FeCl_3$ wird langsam 300 bis 400 ml (Überschuss) 0,1-molare Natronlauge (NaOH) gegeben. Dabei fällt unmittelbar ein flockiger, gelblichbrauner Niederschlag aus, bei dem es sich vornehmlich um Eisen (III) - hydroxid handelt. Die Reaktion kann wie folgt wiedergegeben werden:

$$FeCl_3 + 3NaOH \rightarrow Fe(OH)_3 + 3NaCl.$$

Tränkt man ca. 1/2 kg Feinsand mit der $FeCl_3$-Lösung und beaufschlagt man sie mit Natronlauge, läuft die Reaktion in den Zwischenräumen des Sandes ab, wobei die Poren verstopft werden. Nach Abgießen des Überstandes und Stehenlassen in einer Schale trocknet der Sand allmählich aus. Im Verlauf etwa einer Woche tritt im Sand eine teilweise Verkittung und Verfestigung ein. Die Verfestigung ist daran zu erkennen, dass der ursprünglich kohäsionslose Sand kleine Brocken bildet. Dies wird in erster Linie dadurch verursacht, dass sich das amorphe Eisenhydroxid in kristallines Eisen(III)-oxihydrat (FeO(OH)) umbildet.
Eine bedeutend höhere Ausbeute an Eisen(III)-hydroxid ist zu erzielen, wenn man statt Eisen(III)-chlorid Poly-Eisen(III)-hydroxidchlorid ($Fe_2(OH)_2Cl$) verwendet. Dazu ist nur etwa 1/3 der sonst erforderlichen Menge an Natronlauge erforderlich.

Beispiel 4:

In 100 ml 0,1-molare wässrige Lösung von $FeSO_4$ wird langsam 200 bis 250 ml (Überschuss) 0,1-molare Natronlauge (NaOH) gegeben. Dabei fällt zunächst ein flockiger, weißlicher Niederschlag aus, bei dem es sich um Eisen(II)-hydroxid handelt. Bei Luftzutritt oder gelöstem Sauerstoff im Wasser färbt sich der Niederschlag im Verlauf einiger Tage allmählich gelblichbraun. Die Farbänderung ist eine Folge der Oxidation von $Fe(OH)_2$ zu $Fe(OH)_3$. Die Reaktionsgleichung dieser Reaktion ist wahrscheinlich:

$$4FeSO_4 + 8NaOH + 2H_2O + O_2 \rightarrow 4Fe(OH)_3 + 4Na_2SO_4:$$

Tränkt man ca. 1/2 kg Feinsand mit der $FeSO_4$-Lösung und beaufschlagt man sie mit der Natronlauge, läuft die Reaktion in den Zwischenräumen des Sandes ab, wobei die Poren verstopft werden. Nach dem Abgießen des Überstandes nach einigen Tagen und Stehenlassen in einer Schale trocknet der Sand allmählich aus. Im Verlauf mehrerer Tage tritt im Sand eine teilweise Verkittung und Verfestigung ein. Die Verfestigung ist daran zu erkennen, dass der ursprünglich kohäsionslose Sand kleine Brocken bildet. Dies wird vornehmlich dadurch verursacht, dass das 2-wertige Eisenhydroxid zu 3-wertigem oxydiert wird und sich das amorphe Eisenhydroxid in kristallines Eisen(III)-oxidhydrat (FeO(OH)) umbildet. Die Oxidation kann durch Beigabe von Kaliumpermanganat beschleunigt werden.

Beispiel 5:

Die Reaktion kann nach folgender Reaktionsgleichung ablaufen:

$$30FeSO_4 + 6KMnO_4 + 36H_2O \rightarrow 16FeOOH + 3K_2SO_4 + 6MnSO_4 + 7Fe_2(SO_4)_3.$$

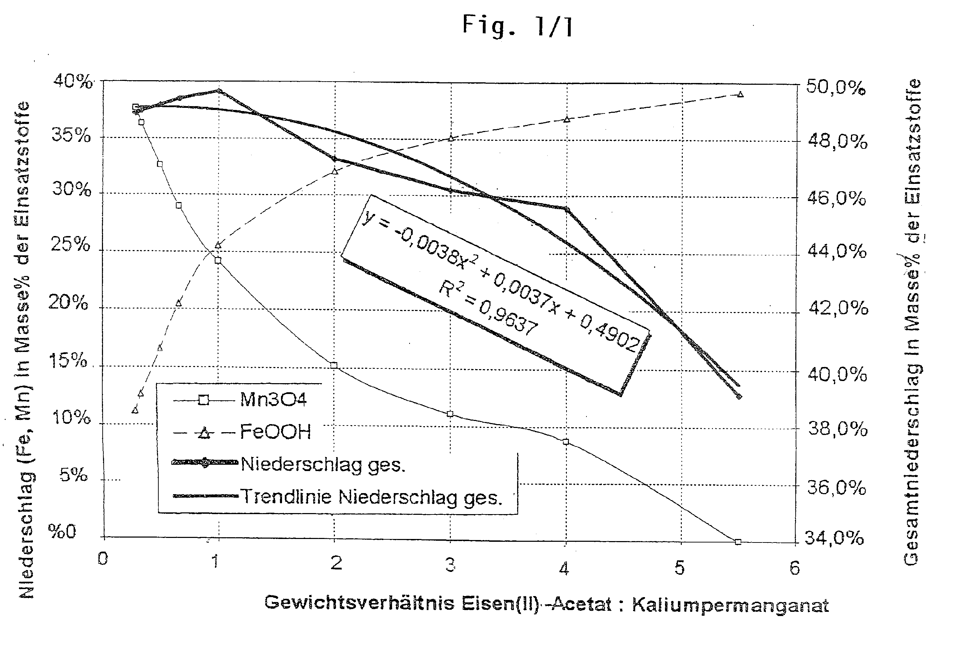

Eisen(III)-sulfat ist in Wasser löslich. In diesem Beispiel werden zum Abdichten von Böden eingesetzt Fe(II)-sulfat und Kaliumpermanganat in wässeriger Lösung. Es bildet sich ein voluminöses Gemisch aus Eisen(III)-Hydroxiden, Eisen(III)-oxidhydraten und verschiedene Manganhydroxiden, welches die Poren des Bodens verschließt und diesen so dichtet.
Je basischer bzw. oxidierter der Boden ist, desto höher sollte der Anteil an Eisenacetat sein, je saurer bzw. reduzierter, desto höher soll der Anteil an Kaliumpermanganat sein. Im neutralen Milieu bleibt der Anteil der ausgefällten Eisen- bzw. Manganoxide in Bezug auf die Einsatzstoffe nahezu gleich. Generell steigt der Anteil an ausgefällten Stoffen mit dem Anteil an Kaliumpermanganat. Dies führt jedoch gleichzeitig zu einem starken Anstieg des Anteils an Manganoxiden in den ausgefällten Stoffen. Hohe Anteile an Manganoxiden sind in bestimmten Fällen zu vermeiden, weil Manganoxide ungünstigere Festigkeits- und Dichtungseigenschaften ergeben können als Eisenoxide.
Wie das in der Zeichnung wiedergegebene Diagramm zeigt, kann die Menge an ausgefällten Stoffen 50 Gew.

% der Ausgangsstoffe nicht überschreiten. Im Bereich der Gewichtverhältnisse zwischen Eisen(II)acetat und Kaliumpermanganat von 1:4 bis 2:1 liegt der Anteil der ausgefällten Oxide bei ca. 47 bis 49 Gew.% der Ausgangsstoffe. Es besteht daher ein breiter Variationsspielraum, der genutzt werden kann, um das Verhältnis der Einsatzstoffe auf die pH- und Redox-Verhältnisse des Bodens abzustimmen.

Die abdichtende Wirkung kann auch dadurch unterstützt werden, dass in den abzudichtenden Boden Kalkmilch (wässerige $Ca(OH)_2$-Lösung) infiltriert wird. Dabei reagiert das durch die Oxidation organischer Anteile entstehende Kohlendioxid durch Bildung von Kalk nach der Formel:

$$Ca\,(OH)_2 + CO_2 \rightarrow CaCO_3 + H_2O$$

Der Niederschlag aus Kalziumkarbonat (Kalk) trägt ebenso wie die ausgefallenen Eisen- und Mangan(hydr) oxide zur Abdichtung und Verfestigung des Bodens bei. Außerdem erhöht sich dadurch der Anteil der ausgefällten Stoffe in Bezug auf die Menge der Einsatzstoffe, weil das frei werdende $CO_2$ in Form von Kalk als Feststoff ausgefällt wird.

Außerdem kann der zu behandelnde Boden mit Mikroorganismen beimpft werden, die aus Oxidationsprozessen ihren Energiebedarf decken. Dazu zählen z.B. Eisenbakterien. Das Impfen mit solchen Mikroorganismen beschleunigt und verbessert dasn Ausfällen von Eisen(III)-oxidhydrat. Darüber hinaus bilden die Mikroorganismen eine schleimige Substanz, welche die Poren und Hohlräume des Bodens verstopft und dergestalt selbst zur Abdichtung beiträgt.

Nachstehend werden Laborversuche für das erfindungsgemäße Verfahren wiedergegeben:

Versuch 1:

In 100 ml Wasser werden bei Zimmertemperatur 10 mMol (ca. 1,46 g) Eisen(II)-acetat gelöst. Hernach wird langsam eine 0,1 molare wässerige Kaliumpermanganatlösung zugetropft. Dabei fällt zunächst ein bräunlicher, gallertiger Niederschlag aus, bei dem es sich um Eisen(II)-Oxidhydrat, FeO(OH), handelt. Gleichzeitig entsteht Essiggeruch, der auf Bildung von freier Essigsäure hinweist. Die violette Färbung der zugegebenen $KMnO_4$-Lösung verschwindet sofort.

Nach Zugabe von ca. 20 ml 0,1 molarer $KMnO_4$-Lösung bleibt die violette Färbung bestehen. Offenbar findet keine weitere Reaktion zwischen Eisen(II)-acetat und Kaliumpermanganat mehr statt.

Daraus ist zu entnehmen, dass eine Reaktion nach folgender Summenformel abläuft:

$$5\,Fe(CH_3COO)_2 + 1\,KMnO_4 + 6\,H_2O \rightarrow 7\,CH_3COOH + 1\,Mn(CH_3COO)_2 + 1$$

$$CH_3COOK + 5\,FeOOH$$

Versuch 2:

Eine Eprouvette der Lösung aus Versuch 1 mit einem Überschuss von Kaliumpermanganat wird bei Zimmertemperatur verschlossen stehen gelassen. Nach ca. 1 Tag verschwindet der Essiggeruch, und die violette Färbung geht deutlich zurück, weil das Kaliumpermanganat die organischen Anteile (Acetat und Essigsäure) zu Kohlendioxid und Wasser oxidiert.

Die Gesamtreaktion entspricht nachstehender Reaktionsgleichung:

$$13\,Fe\,(CH_3COO)_2 + 51\,KMnO_4 \rightarrow 13\,FeOOH + 17\,Mn_3O_4 + 51\,KOH + 52\,CO_2 + 7$$

$$H_2O$$

Versuch 3:

Ca. 20 g loses Sand-Feinkies-Gemisch ("Baumaterial") wird bei Zimmertemperatur mit 10 ml 1 molarer Eisen(II)acetat-Lösung und 20 ml 1 molarer Kaliumpermangangat-Lösung getränkt. Nach ca. 30 Stunden wird der Überstand abgegossen.

Zwischen den Sand- und Kieskörnern hat sich ein dunkler, bräunlicher Niederschlag gebildet (FeO(OH) und Mn-Oxide). Durch diesen Niederschlag wird das ursprünglich kohäsionslose Sand-Feinkies-Gemisch verkittet. Dies ist daran festzustellen, dass es auch beim Kippen der Versuchsschale um 90° nicht ausrieselt, sondern erst nach mehreren Stößen herausfällt.

Nach dem Trocknen bilden sich aus dem verkitteten Sand-Kies-Gemisch mehr oder weniger feste Brocken.

Zusammenfassend kann ein Ausführungsbeispiel wie folgt dargestellt werden:

Zum Abdichten von losen Böden wird in den Boden eine Lösung eines Eisen(II)-salzes und eine Lösung von Kaliumpermanganat eingebracht. Dabei oxidiert das Eisen(II)-Salz zu dreiwertigem Eisen, das vornehmlich zu Hohlräume im Boden abdichtendem Eisenoxidhydrat ausfällt. Das Abdichten des Bodens wird durch ausfallende Mangan-Verbindungen, wie $Mn_3O_4$ unterstützt. Der Acetat-Rest kann zu Kohlendioxid und Wasser oxidiert werden.

**Patentansprüche**

1. Verfahren zum Abdichten von Böden und Baumaterial, **dadurch gekennzeichnet, dass** in dem Boden/das Baumaterial dessen Poren zu verschließen sind, ein Stoff eingebracht wird und dass der Stoff zu einem voluminösen, die Poren verschließenden Stoff umgewandelt wird.

2. Verfahren nach Anspruch 1, **dadurch gekennzeichnet, dass** der Stoff in wässeriger Lösung eingebracht wird.

3. Verfahren nach Anspruch 1 oder 2, **dadurch gekennzeichnet, dass** der Stoff in ein Hydroxid und/oder Oxidhydrat umgewandelt wird.

4. Verfahren nach einem der Ansprüche 1 bis 3, **dadurch gekennzeichnet, dass** als Stoff eine Eisen(II)- und/oder Eisen(III)-Verbindung eingebracht wird.

5. Verfahren nach einem der Ansprüche 1 bis 4, **dadurch gekennzeichnet, dass** als Stoff ein Salz einer organischen Säure eingebracht wird.

6. Verfahren nach einem der Ansprüche 1 bis 5, **dadurch gekennzeichnet, dass** der eingebrachte Stoff oxidiert und in eine voluminöse Verbindung umgewandelt wird.

7. Verfahren nach Anspruch 6, **dadurch gekennzeichnet, dass** in den Boden bzw. das Baumaterial eine wässerige Lösung einer Eisen-(II)-Verbindung eingebracht, die Eisen-(II)-Verbindung durch ein Oxidationsmittel zu dreiwertigem Eisen oxidiert und das dreiwertige Eisen als Oxid und/oder Hydroxid, insbesondere als Eisen-(III)-oxidhydrat, ausgefällt wird.

8. Verfahren nach Anspruch 7, **dadurch gekennzeichnet, dass** ein Eisen-(II)-Salz einer zu Kohlendioxid und Wasser oxidierbaren organischen Säure verwendet wird und dass als Oxidationsmittel eine Verbindung eingesetzt wird, die nach der Redoxreaktion ebenfalls eine in Wasser schlecht oder nicht lösliche Verbindung ergibt.

9. Verfahren nach einem der Ansprüche 1 bis 8, **dadurch gekennzeichnet, dass** die Säure eine kurzkettige Karbonsäure ist.

10. Verfahren nach Anspruch 9, **dadurch gekennzeichnet, dass** die Karbonsäure ausgewählt ist aus der Gruppe Ameisensäure, Essigsäure, Zitronensäure oder Gemische dieser Säuren.

11. Verfahren nach einem der Ansprüche 1 bis 10, **dadurch gekennzeichnet, dass** als Oxidationsmittel ein Permanganat, insbesondere Kaliumpermanganat, verwendet wird.

12. Verfahren nach einem der Ansprüche 1 bis 11, **dadurch gekennzeichnet, dass** das Oxidationsmittel als wässerige Lösung eingesetzt wird.

13. Verfahren nach einem der Ansprüche 1 bis 12, **dadurch gekennzeichnet, dass** der wässerigen Lösung des Eisen-II-Salzes oder des Oxidationsmittels Kalkmilch zugesetzt wird.

14. Verfahren nach einem der Ansprüche 1 bis 13, **dadurch gekennzeichnet, dass** die Lösung des Eisen-II-Salzes und die Lösung des Oxidationsmittels nacheinander in den abzudichtenden Boden bzw. das Baumaterial eingebracht werden.

15. Verfahren nach Anspruch 14, **dadurch gekennzeichnet, dass** die Lösung des Eisen-II-Salzes und die Lösung

EP 1 508 606 A1

des Oxidationsmittels nacheinander über Sonden in den Boden injiziert werden.

16. Verfahren nach einem der Ansprüche 1 bis 13, **dadurch gekennzeichnet, dass** die Lösung des Eisen-II-Salzes und die Lösung des Oxidationsmittels gleichzeitig über einander benachbarte Sonden in den Boden injiziert werden.

17. Verfahren nach einem der Ansprüche 1 bis 16, **dadurch gekennzeichnet, dass** das Abdichten des Bodens durch die ausgefällte Eisen-III-Verbindung durch Mikroorganismen unterstützt wird.

Niederschlag (Fe, Mn) in Masse% der Einsatzstoffe

Gesamtniederschlag in Masse% der Einsatzstoffe

Gewichtsverhältnis Eisen(II)-Acetat : Kaliumpermanganat

$$y = -0{,}0038x^2 + 0{,}0037x + 0{,}4902$$
$$R^2 = 0{,}9637$$

- □— Mn3O4
- ⚊△⚊ FeOOH
- Niederschlag ges.
- Trendlinie Niederschlag ges.

EP 1 508 606 A1

**Europäisches Patentamt**

**EUROPÄISCHER RECHERCHENBERICHT**

Nummer der Anmeldung

EP 04 45 0153

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| D,X | DE 42 42 682 A (RUETGERSWERKE AG) 23. Juni 1994 (1994-06-23) * Ansprüche 1,5-11 * * Seite 2, Zeile 56 - Zeile 58 * * Seite 3, Zeile 4 - Zeile 54 * ----- | 1-10,12, 14-17 | C09K17/04 |
| X | EP 0 476 263 A (AMERICAN CYANAMID CO) 25. März 1992 (1992-03-25) * Ansprüche 1-5 * * Seite 2, Zeile 49 - Seite 3, Zeile 5 * * Seite 3, Zeile 33 - Zeile 45 * * Seite 4, Zeile 6 - Zeile 15 * ----- | 1,2,4,6, 11,12, 14-17 | |
| X | US 4 015 979 A (FISHBURN ROBERT ANTHONY ET AL) 5. April 1977 (1977-04-05) * Ansprüche * * Spalte 2, Zeile 27 - Spalte 3, Zeile 10 * * Spalte 5, Zeile 9 - Zeile 15 * ----- | 1-10, 14-17 | |
| X | US 3 732 698 A (ARORA H) 15. Mai 1973 (1973-05-15) * Ansprüche 1,2 * * Spalte 3, Zeile 3 - Zeile 18 * ----- | 1 | RECHERCHIERTE SACHGEBIETE (Int.Cl.7) C09K |

Der vorliegende Recherchenbericht wurde für alle Patentansprüche erstellt

| Recherchenort | Abschlußdatum der Recherche | Prüfer |
|---|---|---|
| Den Haag | 23. November 2004 | RODRIGUEZ FONTAO, M |

KATEGORIE DER GENANNTEN DOKUMENTE

X : von besonderer Bedeutung allein betrachtet
Y : von besonderer Bedeutung in Verbindung mit einer
     anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
     nach dem Anmeldedatum veröffentlicht worden ist
D : in der Anmeldung angeführtes Dokument
L : aus anderen Gründen angeführtes Dokument

&  : Mitglied der gleichen Patentfamilie, übereinstimmendes
     Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**  EP 04 45 0153

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-11-2004

| Im Recherchenbericht angeführtes Patentdokument | | Datum der Veröffentlichung | Mitglied(er) der Patentfamilie | | Datum der Veröffentlichung |
|---|---|---|---|---|---|
| DE 4242682 | A | 23-06-1994 | DE | 4242682 A1 | 23-06-1994 |
| EP 0476263 | A | 25-03-1992 | US | 5065822 A | 19-11-1991 |
| | | | AU | 8388391 A | 19-03-1992 |
| | | | CA | 2051257 A1 | 15-03-1992 |
| | | | EP | 0476263 A2 | 25-03-1992 |
| | | | JP | 6025666 A | 01-02-1994 |
| US 4015979 | A | 05-04-1977 | GB | 1449127 A | 15-09-1976 |
| | | | BE | 808522 A1 | 29-03-1974 |
| | | | CA | 997152 A1 | 21-09-1976 |
| | | | DE | 2361276 A1 | 27-06-1974 |
| | | | ES | 421362 A1 | 01-07-1976 |
| | | | FR | 2209869 A1 | 05-07-1974 |
| | | | JP | 49096903 A | 13-09-1974 |
| | | | JP | 52017803 B | 18-05-1977 |
| | | | SE | 396091 B | 05-09-1977 |
| US 3732698 | A | 15-05-1973 | KEINE | | |

EPO FORM P0461

Für nähere Einzelheiten zu diesem Anhang : siehe Amtsblatt des Europäischen Patentamts, Nr.12/82